# EUROPEAN PATENT APPLICATION

(11) **EP 3 232 393 A1**
(43) Date of publication of application: **18.10.2017**
(21) Application number: 15869950.4
(22) Date of filing: 14.12.2015
(51) Int. Cl.: G06Q 30/06, G06Q 30/02

(54) **ELECTRONIC TRANSACTION SYSTEM, METHOD AND PROGRAM**

(30) Priority: 14.12.2014 JP 2014252551; 31.07.2015 JP 2015151370; 25.09.2015 JP 2015188991
(71) Applicant: Kagiwada, Yoshimitsu, Ashigarakami-gun Kanagawa 258-0002 (JP); Keysoft Inc., Ashigarakami-gun Kanagawa 258-0002 (JP)
(72) Inventor: Kagiwada, Yoshimitsu, Kanagawa, 2580002 (JP)
(74) Representative: Leinweber & Zimmermann
(86) International application number: PCT/JP2015/084985
(87) International publication number: WO 2016/098745

(57) **Abstract**

[Object]

An electric transaction system that allows people to order an item by taking a picture concerning the item is made capable of delivering a performance reward to a person who presents the item when a customer buys the item through a medium (including an electronic medium) presenting the item.

[Solving Means]

An order I/F device (10) acquires an item identifier included in order form information by taking a picture of a code or a mark provided visibly or invisibly on a medium, and acquires a channel identifier that allows unique identification of a payee of a performance reward from the code or the mark and transmits the channel identifier to an order processing device (20). The order processing device (20) executes processing of distributing the performance reward to the payee based on the channel identifier received from the order I/F device (10).

## Description

### TECHNICAL FIELD

The invention relates to an electric transaction system, and specifically relates to an electric transaction system that allows a customer to order an item (a product or a service) by taking a picture concerning the item.

### BACKGROUND ART

In order to order an item via online mail-order, an orderer searches for the item on an EC mall or an EC site, and performs operations such as clicks to select the target item from the search results. Patent Literature 1 is a prior art that omits those operations and thus makes ordering simple, for example.
In the prior art disclosed in this Patent Literature 1, once taking a picture of product information on a catalog page, a product ID of the product is recognized from the taken picture.
However, there has been no way to deliver a sales performance reward to a person who presents a product on a catalog page even though a customer buys the product by viewing the catalog page.

### CITATION LIST

### PATENT LITERATURE

Patent Literature 1: Japanese Patent Application Publication No. 2014-56504

### SUMMARY OF INVENTION

### TECHNICAL PROBLEMS

The invention aims at making improvement for the inconvenience of the conventional example, and specifically has an object to provide an electric transaction system that allows people to order an item by taking a picture concerning the item, and is made capable of delivering a performance reward to a person who presents the item when a customer buys the item through a medium (including an electronic medium) presenting the item.

### SOLUTION TO PROBLEMS

The invention adopts the following configuration for solving the above problems. A system of the invention includes an order I/F device that transmits order form information of an item including an item identifier and an order processing device that receives the order form information of the item and executes order processing based on the order form information of the item. The order I/F device acquires the item identifier included in the order form information by taking a picture of a code or a mark provided visibly or invisibly on a medium, and acquires a channel identifier that allows unique identification of a payee of a performance reward from the code or the mark and transmits the channel identifier to the order processing device. The order processing device executes processing of distributing the performance reward to the above payee based on the channel identifier received from the order I/F device.

### ADVANTAGEOUS EFFECTS OF INVENTION

According to the invention, an electric transaction system that allows people to order an item by taking a picture concerning the item is made capable of delivering a performance reward to a person who presents the item when a customer buys the item through a medium presenting the picture concerning the item.

### BRIEF DESCRIPTION OF DRAWINGS

[Fig. 1] A configuration diagram illustrating an embodiment of the invention.
[Fig. 2] A structure diagram of data stored in a personal information storage illustrated in Fig. 1.
[Fig. 3] A structure diagram of data stored in an item information storage illustrated in Fig. 1.

### DESCRIPTION OF EMBODIMENTS

### (1)[First Embodiment] Usage of Code or Mark

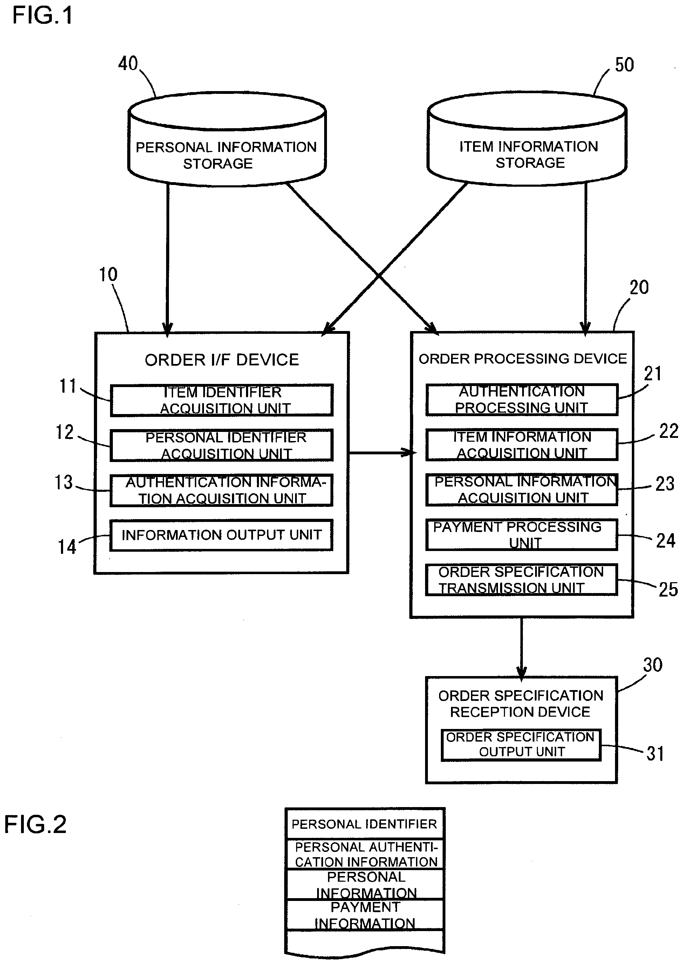

A first embodiment of the invention is described below. Fig. 1 is a block configuration diagram of a personal information-use order system that is an embodiment of the invention. The system comprises order interface device (order I/F device) 10, order processing device 20, order specification reception device 30, personal information storage 40, and item information storage 50. There are one order I/F device 10 and one order processing device 20 illustrated with respect to one personal information storage 40; however, there may be multiple order I/F devices 10 and order processing devices 20 that use personal information storage 40, indeed. Also, there is only one order I/F device 10 with respect to order processing device 20; however, there may be multiple order I/F devices 10 that use order processing device 20.

### (1-1) Order I/F Device 10

Order I/F device 10 comprises item identifier acquisition unit 11, personal identifier acquisition unit 12, authentication information acquisition unit 13, and information output unit 14. A processor implements these units 11 to 14 by executing a program. The information which units 11 to 14 use for processing is read from a storage area. The information processed by units 11 to 14 is stored into the storage area. The storage area is provided in a storage device. The storage device may be either a main storage device or an auxiliary storage device. Order I/F device 10 receives information from an external device via a communication device. Order I/F device 10 transmits information to the external device via the communication device.

### (1-1-1) Item Identifier Acquisition Unit 11

Item identifier acquisition unit 11 captures an image of a marker or a code, which is provided visibly or invisibly on a medium, with an image capture device (camera) and acquires an item identifier and a channel identifier based on the captured image of the marker or the code. The item identifier is an identifier that allows unique identification of the item information stored in item information storage 50. The channel identifier is an identifier that allows unique identification of a merchant who receives distributed sales margins when the item is sold. The medium on which the marker or the code is provided is, for example, any products such as a book, a calendar, a vending machine, and clothing, a product poster put on a wall of a station, a screen of a gas pump, a flyer, an advertisement, a newspaper, a publication, a signboard, a digital signage, a television, a television monitor installed at a front of a station and a hotel, a photo frame equipped in a taxi and a store, a car navigation system, and the like. The code is a two-dimensional barcode such as a QR code (registered mark), for example. The marker is a marker having the same spec with that for a vision based AR (Augmented Reality). The image capture device is equipped in order I/F device 10. When the code or the marker (hereinafter called "QR code and the like") includes a server URL of order processing device 20, the item identifier and the channel identifier may be added as a query parameter to the server URL. An example of this query parameter is presented below.

### https://Asite.biz/a.php?product_id=1210&channel_id=kurofune&basho= kurofune11

Here, product_id intends the item identifier. Channel_id intends the channel identifier. Basho intends an identifier of a place where the QR code and the like is published (such as location or a store name). The channel identifier may intend both the payee of the distributed sales margins and the place where the QR code and the like is published; however, when the payee of the distributed sales margins and the place where the QR code and the like is published are different, the parameter like the above in which the channel identifier and the place identifier are independent may be better. For example, there may be a case where the channel identifier intends an identifier of a taxi company, and the place identifier intends an identifier of a vehicle body of a taxi that publishes the QR code and the like. Including the identifier of the place where the QR code and the like is published in the query parameter allows a server of order processing device 20 side, which receives an http request, to recognize the original place where the QR code and the like is published. Thus, the information of the publication place can be used for information processing such as a market research.

### (1-1-2) Personal Identifier Acquisition Unit 12

Personal identifier acquisition unit 12 acquires a personal identifier, which is for unique specification of the personal information and the like stored in personal information storage 40, by reading it from a storage area of order I/F device 10. It is enough for the personal identifier to be an identifier that allows unique identification of the personal information and the like stored in personal information storage 40; for example, the personal identifier may be an identifier that is unique to order I/F device 10. For example, when order I/F device 10 is a mobile terminal, information such as the terminal number unique to the mobile terminal can be adopted as the personal identifier. In addition, the unique number and the like, which is stored in an IC card (IC chip) such as a SIM card inserted in the mobile terminal, can be adopted as the personal identifier.

### (1-1-3) Authentication Information Acquisition Unit 13

Authentication information acquisition unit 13 acquires authentication information for identifying a user of order I/F device 10. There may be various ways for acquiring the authentication information: for example, acquiring a password which the user inputs from an input device; acquiring voiceprint information of the user based on a voice inputted from a microphone; acquiring fingerprint information of the user via a fingerprint sensor; and acquiring face identification information and iris identification information of the user based on an image inputted from the image capture device. The input device, the microphone, the fingerprint sensor or the image capture device is equipped in order I/F device 10.

### (1-1-4) Information Output Unit 14

When the user of order I/F device 10 executes an action of indicating ordering of an item, information output unit 14 transmits order form information to order processing device 20, the order form information being associated with the item identifier, the channel identifier, and the identifier of the place where the QR code and the like is published acquired by item identifier acquisition unit 11, the personal identifier acquired by the personal identifier acquisition unit, and the authentication information acquired by the authentication information acquisition unit.

### (1-2) Order Processing Device 20

Via a computer network such as the Internet, order processing device 20 receives the order form information transmitted from order I/F device 10. Order processing device 20 comprises authentication processing unit 21, item information acquisition unit 22, personal information acquisition unit 23, payment processing unit 24, and order specification transmission unit 25. The processor implements these units 21 to 25 by executing a program. The information which units 21 to 25 use for processing is read from the storage area. The information processed by units 11 to 14 is stored into a storage area. The storage area is provided in a storage device. The storage device may be either a main storage device or an auxiliary storage device. Order processing device 20 receives information from the external device via the communication device. Order processing device 20 transmits information to the external device via the communication device.

### (1-2-1) Authentication Processing Unit 21

Authentication processing unit 21 acquires the personal identifier included in the order form information, and acquires authentication information associated with this personal identifier from personal information storage 40. Authentication Processing Unit 21 acquires authentication information included in the order form information, and determines whether this authentication information matches the authentication information acquired from personal information storage 40.

### (1-2-2) Item Information Acquisition Unit 22

The item information acquisition unit acquires the item identifier included in the order form information, and acquires the item information associated with this item identifier from the item information storage 50. The item information to be acquired at least includes identification information of the item, price information of the item, and contact information of the shipper of the item (address information for communication such as an IP address and an E-mail address set in order specification reception device 30).

### (1-2-3) Personal Information Acquisition unit 23

When the two pieces of authentication information match in authentication processing unit 21 and thus the identification is made, personal information acquisition unit 23 acquires the personal identifier included in the order form information, and acquires the personal information associated with this personal identifier from personal information storage 40. The personal information to be acquired at least includes information, that is, an address, a name, and a contact of the delivery destination of the item.

### (1-2-4) Payment Processing unit 24

When the two pieces of authentication information match in authentication processing unit 21 and thus the identification is made, payment processing unit 24 acquires the personal identifier included in the order form information, and acquires payment information associated with this personal identifier from the personal information storage 40. Payment processing unit 24 then executes predetermined payment processing, for either advance payment or future payment, based on the payment information and the item information which the item information acquisition unit acquires.

At that time, payment processing unit 24 may read multiple pieces of payment information such as credit card information from personal information storage 40, and may transmit an interface for selecting one of the read payment information to order I/F device 10. The user of order I/F device 10 may be authenticated before the transmission. Order I/F device 10 displays the interface for selecting one of the payment information received from order processing device 20 to the user of order I/F device 10, allows the user to select one of the payment information, and transmits an identifier of the selected payment information to order processing device 20. Order processing device 20 receives the identifier of the selected payment information, and executes payment processing with the selected payment information.

Payment processing unit 24 uses the channel identifier included in the order form information to execute performance distribution processing for paying a predetermined sales performance reward to the merchant, who corresponds to the channel identifier. The channel identifier including the marker or the code provided on the medium makes it possible to pay the performance reward to the merchant.

Order processing device 20 stores the channel identifier and information of the sales performance reward payee (such as a bank account) while associating them with each other, in an internal or external storage device of the device. After the above payment processing, payment processing unit 24 reads the information of the sales performance reward payee associated with the above channel identifier and executes gain distribution processing (processing of calculating reward amount of a term, transfer processing, and the like for each payee) to pay a sales performance reward to the payee.

A numerical value, a string intending a place where an electronic medium player is installed, a unique number of the electronic medium player (a device number or a terminal number), and the like can be adopted as the channel identifier.

Order processing device 20 acquires the identifier of the place where the QR code and the like is published from the order form information of the deal where the payment processing is executed, and accumulates the identifier of the place where the QR code and the like in the storage device in order to provide the identifier to the specific information processing such as the market research and management.

### (1-2-5) Order Specification Transmission Unit 25

When the payment processing by payment processing unit 24 is normally completed, order specification transmission unit 25 generates order specification information, and transmits the generated order specification information to order specification reception device 30. The order specification information at least includes the address, the name, and the contact of the delivery destination of the item, which personal information acquisition unit 23 acquires, as well as the identification information of the item which item information acquisition unit 22 acquires. Order specification transmission unit 25 transmits the order specification information to order specification reception device 30 based on the contact information of the shipper of the item which the item information acquisition unit acquires.

### (1-3) Order Specification Reception Device 30

Via the computer network such as the Internet, order specification reception device 30 receives the order specification information transmitted from order processing device 20. Order specification reception device 30 comprises order specification output unit 31. The processor implements order specification output unit 31 by executing a program. The information which order specification output unit 31 uses for processing is read from the storage area. The information processed by order specification output unit 31 is stored into a storage area. The storage area is provided in a storage device. The storage device may be either a main storage device or an auxiliary storage device. Order specification reception device 30 receives information from the external device via the communication device. Order specification reception device 30 transmits information to the external device via the communication device. In the embodiment, order specification reception device 30 is installed at a depot of the shipper of the ordered item. The place at which order specification reception device 30 is installed however may be another place.

### (1-3-1) Order Specification Output Unit 31

Order specification output unit 31 allows an output device such as a printer to output the order specification information. Based on the outputted order specification information, a worker at the item shipper prepares to deliver the ordered item to the delivery destination.

### (1-4) Personal Information Storage 40

Personal information storage 40 is provided in a storage area of a storage device. It is enough for personal information storage 40 to be in a place where order processing device 20 can acquire information from personal information storage 40; personal information storage 40 may be either inside or outside order processing device 20. Communication between order processing device 20 and personal information storage 40, which is disposed outside of order processing device 20, is established via the computer network such as the Internet. Information stored in personal information storage 40 is added or updated constantly by an external system. The external system is a system that provides a service site different from the online mail-order site which order processing device 20 provides. There is no contractual relationship other than the contract of personal information provision between the online mail-order site and the service site. As illustrated in Fig. 2, personal information storage 40 at least stores the personal identifier, the personal authentication information, the personal information, and the payment information while associating them with each personal identifier.

### (1-5) Item Information Storage 50

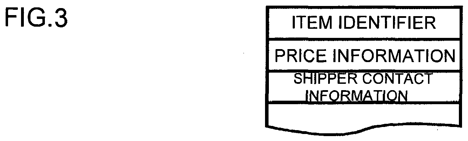

Item information storage 50 is provided in a storage area of a storage device. It is enough for item information storage 50 to be in a place where order processing device 20 can acquire information from item information storage 50; item information storage 50 may be either inside or outside order processing device 20. Communication between order processing device 20 and item information storage 50, which is disposed outside of order processing device 20, is established via the computer network such as the Internet. As illustrated in Fig. 3, item information storage 50 at least stores the item identifier, the price information of the item, and the contact information of the shipper of the item (address information for communication such as the IP address and the E-mail address set in order specification reception device 30) as the item information while associating them with each item identifier.

### (1-6) Operations

In the above configuration, the user of order I/F device 10 captures an image of the code or the mark, for ordering a specific item, provided on the medium and executes the predetermined operation of indicating ordering of the item. Thereafter, each of item identifier acquisition unit 11, personal identifier acquisition unit 12, and authentication information acquisition unit 13 executes processing, and then order I/F device 10 immediately transmits the order form information to order processing device 20. "Predetermined operation of indicating" may be an operation of allowing authentication information acquisition unit 13 to acquire the authentication information or may be an operation of allowing the user to input confirmation by an input device or a sensor. In order processing device 20, authentication processing unit 21 performs identification of the orderer based on the received order form information, item information acquisition unit 22 and personal information acquisition unit 23 acquire the personal information of the orderer and the item information of the ordered item, and payment processing unit 24 executes payment processing based on the personal information and the item information. Once payment processing unit 24 completes the predetermined payment processing, order specification transmission unit 25 transmits the order specification information to order specification reception device 30. In order specification reception device 30, order specification output unit 31 outputs the received order specification information to the output device. Based on the outputted order specification information, the worker at the item shipper prepares to deliver the ordered item.

Thus, according to the embodiment, just capturing an image of the code or the mark, for ordering a specific item, provided on the medium and executing the operation of indicating ordering of the item, the user of order I/F device 10 allows the item to be delivered to the delivery destination. Using the personal information that is added to personal information storage 40 or updated by the external system makes it possible to complete the order without filling out the personal information such as an address even when it is the first time to place an order with order processing device 30.

### (1-7) Modifications

### (1-7-1) Usage of Personal Information and the like Stored in Order I/F Device 10

Order I/F device 10 may put the personal information and/or the payment information, which is registered in advance in the storage area of order I/F device 10 or the IC card (IC chip) such as the SIM card inserted in order I/F device 10, into the order form information, and may transmit the order form information to order processing device 20. In this case, order processing device 20 can use the personal information and/or the payment information acquired from order I/F device 10 instead of the personal information and the like acquired from personal information storage 40.

### (1-7-2) Identification Only by Order I/F Device 10

Order I/F device 10 may complete the identification processing based on the authentication information by internal processing, and when the identification is made, order I/F device 10 may transmit the order form information to order processing device 20. In this case, the identification processing performed by order processing device 20 can be omitted.

### (1-7-3) Television Tuner as Order I/F Device 10 -

Order I/F device 10 may be a television tuner that corresponds to the bidirectional function of the digital broadcast (including a television tuner integrated in a television delivery destination). The user operates a remote controller of the television tuner and performs an operation of ordering a product from a screen of a data broadcast. With this operation, order I/F device 10 uses the bidirectional function to transmit the order form information associated with the item identifier of the ordered product, the channel identifier intending a television station that provides the data broadcast, an identifier of a place where an order form is published (a prefecture selected when setting television channels, for example), the personal identifier, and the authentication information to order processing device 20. However, when the order form information is transferred to order processing device 20 through a computer of the television station, the channel identifier may associate the channel identifier intending the television station with the order form information at the computer of the television station where the order form information passes through, without putting the channel identifier into the order form information at order I/F device 10. In this way, a viewer of the television can order a product related to the on-air show by operating the remote controller of the television. In addition, the sales margins of the product can be distributed to the television station.

### (1-7-4) MMS (Multimedia Station) as Order I/F Device 10

Order I/F device 10 may be an MMS (multimedia station), which is an information communication terminal capable of bidirectional communication. The MMS is, for example, installed in a store, a station, and the like. The user operates a touch panel of the MMS and performs an operation of ordering a product from a screen of the MMS. With this operation, order I/F device 10 uses the bidirectional communication to transmit the order form information associated with the item identifier of the ordered product, the channel identifier intending a merchant who provides the MMS, an identifier of a place where an order form is published (a place where the MMS is installed), the personal identifier, and the authentication information to order processing device 20. In this way, when the user buys a product by operating the MMS, the sales margins of the product can be distributed to the merchant who provides the MMS.

### (2)Conclusion

Conventionally, a user has been required to fill out the personal information such as an address in every independent shopping site. Even in the case of accessing a shopping site from the code or the marker such as a QR code (registered mark), still the personal information has been required to be filled out, whereby many steps have been required to complete the shopping. Hence, in the above embodiment, personal information storage 40 is independent from order processing device 20 corresponding to a shopping site. This allows the personal information registered in personal information storage 40 to be used openly over the site. The personal information such as an address registered in personal information storage 40 allows unique identification of the terminal number and the information in the SIM card as the identifier and read the specified identifier.

In the above embodiment, for example, it is possible to order a shirt someone is wearing by taking a picture of the code or the marker provided visibly or invisibly on that shirt. In addition, in the above embodiment, placing an order directly by using real information from a location or the item itself can be made, without looking for the item from a shopping site. Thus shopping is easily achieved. Moreover, in the above embodiment, it is possible to place an order by taking a picture of the code or the marker provided on a book just at the time when the user is being elevated by reading the book. Thus the probability of shopping increases. Furthermore, in the above embodiment, even a roadside station and a product promotion center in a bad location, or between mountains for example, can sell an item in a good location by providing the code or the marker on a poster and the like at a station and a busy street. Since the advertisement connects directly to the sales results, the effect of advertising can be seen obviously.

### REFERENCE SIGNS LIST

- 10: order I/F device
- 11: item identifier acquisition unit
- 12: personal identifier acquisition unit
- 13: authentication information acquisition unit
- 14: information output unit
- 20: order processing device
- 21: authentication processing unit
- 22: item information acquisition unit
- 23: personal information acquisition unit
- 24: payment processing unit
- 25: order specification transmission unit
- 30: order specification reception device
- 31: order specification output unit
- 40: personal information storage
- 50: item information storage

## Claims

1. An electric transaction system, comprising:
an order I/F device that transmits order form information of an item including an item identifier; and
an order processing device that receives the order form information of the item and executes order processing based on the order form information of the item, wherein
the order I/F device acquires the item identifier to be included in the order form information by taking a picture of a code or a mark provided visibly or invisibly on a medium, and acquires a channel identifier that allows unique identification of a payee of a performance reward from the code or the mark and transmits the channel identifier to the order processing device, and
the order processing device executes processing of delivering the performance reward to the payee based on the channel identifier received from the order I/F device.

2. The electric transaction system according to claim 1, wherein the code or the mark includes a server URL for communicating with the order processing device and includes the channel identifier as a query parameter of the server URL.

3. An e-commerce method for a system including an order I/F device that transmits order form information of an item including an item identifier; and an order processing device that receives the order form information of the item and executes order processing based on the order form information of the item, comprising:
causing the order I/F device to acquire the item identifier included in the order form information by taking a picture of a code or a mark provided visibly or invisibly on a medium, and acquiring a channel identifier that allows unique identification of a payee of a performance reward from the code or the mark, and transmit the channel identifier to the order processing device, and
causing the order processing device to execute processing of delivering the performance reward to the payee based on the channel identifier received from the order I/F device.

4. An e-commerce program for a system that includes: an order I/F device that transmits order form information of an item including an item identifier; and an order processing device that receives the order form information of the item and executes order processing based on the order form information of the item, the program causing a processor of the order I/F device to execute
processing of acquiring the item identifier included in the order form information by taking a picture of a code or a mark provided visibly or invisibly on a medium, and processing of acquiring a channel identifier that allows unique identification of a payee of a performance reward from the code or the mark and transmitting the channel identifier to the order processing device.
